# EUROPÄISCHE PATENTSCHRIFT

(11) **EP 1 690 580 B1**
(45) Veröffentlichungstag und Bekanntmachung des Hinweises auf die Patenterteilung: **26.03.2008**
(21) Anmeldenummer: 06002724.0
(22) Anmeldetag: 10.02.2006
(51) Int. Cl.: B01D 35/30, E03B 3/18, E21B 43/08

(54) **Filterrohr**
Filter tube
Tube filtrant

(30) Priorität: 14.02.2005 DE 102005006839
(43) Veröffentlichungstag der Anmeldung: 16.08.2006
(73) Patentinhaber: TPR Fiberdur GmbH & Co. KG, 52457 Aldenhoven (DE)
(72) Erfinder: Stötzel, Michael, 57271 Hilchenbach (DE); Focke, Hans-Karl, Dr.-Ing., 52134 Herzogenrath (DE)
(74) Vertreter: Bauer, Dirk

(56) Entgegenhaltungen:
- EP-A- 0 586 992
- EP-A- 0 659 975
- DE-B- 1 228 204
- DE-U1-0202005 002 87
- FR-A- 1 315 454
- US-A- 3 967 837

## Beschreibung

Die Erfindung betrifft ein Filterrohr eines Erdbrunnens mit einem sich in Längsrichtung des Filterrohres erstreckenden Innenraum und einem diesen umgebenden Mantel, in dem sich Filteröffnungen zum Durchtritt von Flüssigkeit aus einer den Mantel an dessen Außenseite umgebenden Umgebung in den Innenraum befinden.

Derartige Filterrohre sind bereits seit geraumer Zeit allgemein bekannt und werden häufig bei der Wassergewinnung durch Erdbrunnen verwendet. Das Filterrohr besteht aus einer Mehrzahl von axial hintereinander angeordneten Abschnitten, die auf geeignete Weise fest und dicht miteinander verbunden werden. Das Filterrohr besteht insgesamt aus Edelstahl, um dauerhaft korrosiven Einflüssen des zu filternden Mediums widerstehen zu können und damit eine lange Lebensdauer auch unter widrigen Umständen zu ermöglichen. Bei der Herstellung eines Erdbrunnens unter Verwendung der bekannten Filterrohre wird zunächst ein Bohrloch in das Erdreich eingebracht. Im Bereich der zu nutzenden wasserführenden Schichten werden entsprechend deren Mächtigkeit Filterrohre in die Bohrung eingelassen. An das eigentliche Filterrohr, durch das die zu gewinnende Flüssigkeit in den Innenraum eindringt, schließt sich oberhalb ein herkömmliches geschlossenes Rohr bzw. eine entsprechende Anzahl derartiger Rohrstücke an, die sich bis an die Erdoberfläche erstrecken. Die Förderung des Wassers erfolgt mithilfe einer in dem Innenraum des Filterrohres im Bereich der wasserführenden Schicht angeordneten Tauchpumpe, die an ein bis zur Erdoberfläche führendes Steigrohr bzw. einen Stegschlauch angeschlossen ist.

Aus EP 0 659 975 A2 geht ein zusammengesetztes Filterrohr für die Wasser-, Gas- oder Ölgewinnung hervor, das aus einer Vielzahl von axial aneinandergereihten Abschnitten besteht. Das Filterrohr besteht aus einem Rohr, das mit Öffnungen zum Einlass von Flüssigkeit versehen ist. Um das Rohr werden beabstandete, parallele Stützstreben in axiale Richtung angeordnet, die wiederum mit in Umfangsrichtung durch Schweißen befestigtem keilförmigem Draht derart umwunden werden, dass Schlitze mit definierten Abmessungen entstehen. Die derart gebildeten Filterbereiche weisen gegenüber ihren Verbindungsbereichen, in denen keine Drahtumwicklung vorhanden ist, einen deutlich größeren Außendurchmesser auf, weshalb die Verbindungsbereiche so mit einem Mantel versehen werden, dass das Filterrohr auf seiner gesamten (zusammengesetzten) Länge in etwa einen konstanten Außendurchmesser aufweist. Dabei besteht der Mantel im Verbindungsbereich aus zwei Elementen mit einem halbkreisförmigen Querschnitt, die zusammengesetzt den Verbindungsbereich umschließen. Die Elemente bestehen jeweils aus einem Rahmen, der sich aus zwei halbkreisförmigen Flanschen und zwei die Flansche verbindende, axial angeordnete Streben zusammensetzt. An dem Rahmen sind wiederum axial verlaufende Stützstreben angeschweißt, die analog zu dem Aufbau des übrigen Filterbereichs außen mit Abschnitten des keilförmigen Drahts versehen sind.

Grundsätzlich hat sich die Technik der Filterrohre in der Vergangenheit sehr gut bewährt. Aufgrund der Herstellung der Filterrohre aus Edelstahl ist jedoch zum einen der Preis sehr hoch und zum anderen die Herstellung, insbesondere die mechanische Bearbeitung, recht teuer. Der Aufbau der bekannten Filterrohre ist des weiteren aufgrund der komplexen Anforderungen recht kompliziert.

### Aufgabe

Der Erfindung liegt die Aufgabe zugrunde; ein Filterrohr eines Erdbrunnens vorzuschlagen, dass bei Gewährleistung einer hinreichenden Beständigkeit gegenüber korrosiven Medien einen einfacheren Aufbau besitzt und kostengünstiger herstellbar ist, als die bekannten Filterrohre.

### Lösung

Ausgehend von einem Filterrohr der eingangs beschriebenen Art, wird diese Aufgabe erfindungsgemäß dadurch gelöst, dass der Mantel aus einem den Innenraum begrenzenden Innenrohr und Filterelementen besteht, in denen sich die Filteröffnungen befinden und die außerhalb des Innenrohres angeordnet sind, das Durchtrittsöffnungen für die durch die Filteröffnungen der Filterelemente in einen Zwischenraum zwischen den Filterelementen und dem Innenrohr eintretende Flüssigkeit aufweist, wobei der Zwischenraum mit Ausnahme der Filteröffnungen gegenüber der Umgebung abgeriegelt ist, wobei die Filterelemente (15) angrenzend an ihre Stirnseiten jeweils eine umlaufende Nut (21) aufweisen, wobei eine Schelle (26) mit zwei umlaufenden zu den Nuten (21) komplementären Federn (27) versehen ist, die mit den Nuten (21) stirnseitig aneinander stoßender Filterelemente (15) in Eingriff bringbar sind.

Gemäß der Erfindung sind die beiden von einem Filterrohr zu erfüllenden Hauptaufgaben nämlich einerseits eine Abstützfunktion und andererseits die Filterfunktion bauteilmäßig strikt voneinander getrennt: Die Stützfunktion, d. h. insbesondere die Aufnahme von Axial- bzw. Radialkräften, wird von dem Innenrohr übernommen, das aus diesem Grunde entsprechend massiv auszuführen ist. Die Filterfunktion wird hingegen von separaten von außen an das Innenrohr angesetzten Filterelementen erfüllt, die speziell auf die Filteraufgabe hin optimiert werden können. Durch die erfindungsgemäße Konstruktion entfällt somit die Notwendigkeit, in einem einheitlichen Filterrohr beide Aufgaben gemeinsam zu erfüllen, wodurch die Herstellung verteuert und bisweilen Kompromisse in bezug auf die Erfüllung sämtlicher Kriterien einzugehen sind.

Aufgrund der Funktionstrennung ermöglicht das erfindungsgemäße Filterrohr die Verwendung anderer Werkstoffe als Edelstahl, nämlich insbesondere die Verwendung von Kunststoffmaterialien. Diese lassen sich für das Innenrohr, für das Außenrohr oder für beide verwenden. Die Funktionstrennung und die entsprechend optimierbare Form der beiden vorgenannten Bauteile ermöglicht die Anwendung der Extrusions- oder Wickeltechnik insbesondere für das Innenrohr sowie beispielsweise der Spritzgusstechnik insbesondere für die Filterelemente. Komplexe Geometrien wie sie bei den aus Edelstahl hergestellten Filterrohre nach dem Stand der Technik üblich sind, ließen sich hingegen mit dem bekannten Herstellverfahren aus dem Bereich der Kunststofftechnik kaum sinnvoll realisieren.

Um eine möglichst große zusammenhängende Filterfläche zu erreichen, ist nach der Erfindung optional vorgesehen, dass die Filterelemente schalenförmige Filtersegmente sind, die ein in Umfangsrichtung geschlossenes Außenrohr bilden. Vorzugsweise bilden zwei bis vier Filtersegmente einen geschlossenen Außenrohrabschnitt, so dass der Segmentwinkel 180°, 120° oder 90° beträgt. Um eine dichte Verbindung im Bereich der Längsränder derartiger Filtersegmente zu erreichen wird vorgeschlagen, die schalenförmigen Filtersegmente an einem Längsrand mit einer Nut und an dem gegenüberliegenden Längsrand mit einer zu der Nut komplementären Feder zu versehen. Nut und Feder greifen im montierten Zustand der Filtersegmente dichtend ineinander, wobei die Abdichtung erforderlichenfalls mithilfe eines gummielastischen Dichtstreifens weiter erhöht werden kann.

Um auch in Achsrichtung des Filterrohres eine beliebige Ausdehnung der Filterfläche unter Verwendung standardisierter Filterelemente realisieren zu können, ist es sinnvoll, Filterelemente in Längsrichtung des Filterrohres zu einem zusammenhängenden Außenrohr zusammenfügen zu können. Hierzu weisen die Filterelemente an ihren Stirnseiten jeweils eine umlaufende Nut auf, wobei eine Schelle mit zwei umlaufenden zu den Nuten komplementäre Federn versehen ist, die mit den Nuten stirnseitig aneinander stoßender Filterelemente in Eingriff bringbar sind.

Die Schellen sichern vorzugsweise in Umfangsrichtung benachbarte Filterelemente in radiale Richtung und gleichzeitig in axiale Richtung benachbarte Filterelemente in axiale Richtung. Der einfacheren Montage halber bestehen die Schellen vorzugsweise aus zwei Schellenabschnitten, die sich lediglich über einen Teilbereich des Umfangs des Filterrohres erstrecken und kraftschlüssig in Umfangsrichtung miteinander koppelbar sind. Im Fall der Schellen ist eine Zweiteilung in der Regel ausreichend und zur Verkürzung der Montagezeiten sinnvoll. Der Umschlingungswinkel eines Schellenabschnitts beträgt somit vorzugsweise 180°.

Um Schellenabschnitte schnell und einfach miteinander koppeln zu können, wird vorgeschlagen, dass die Schellenabschnitte an einem Ende mit einem eine Bohrung aufweisenden Flansch und an dem anderen Ende mit einer Haken-Ösen-Verbindung versehen sind.

Um das in Axialrichtung erste bzw. letzte Filterelement gegenüber dem Innenrohr abzudichten und diesem gegenüber gegen Verschiebung zu sichern, d. h. das gesamte Paket der Filterelemente kraftschlüssig mit dem Innenrohr zu verbinden, wird vorgeschlagen, dass Außenrohr an zumindest einem Ende mit einem Haltebund zu versehen. Dieser Haltebund kann an seiner dem Außenrohr zugewandten Seite eine umlaufende Nut aufweisen, wobei eine Schelle mit zwei umlaufenden und zu den Nuten komplementären Federn versehen ist, die mit den Nuten eines endständigen Filterelements und des Haltebunds in Eingriff bringbar ist. Sinnvollerweise lassen sich mit ein und derselben Schelle wohl benachbarte Außenrohrabschnitte miteinander als auch ein endständiges Filterelement mit dem Haltebund formschlüssig verbinden.

Die Erfindung weiter ausgestaltend ist vorgesehen, dass die Höhe des Haltebundes im Querschnitt in Richtung von dem Außenrohr weg abnimmt und das der Haltebund an seiner inneren Mantelfläche mit der äußeren Mantelfläche des Innenrohrs, welches dort keine Durchtrittsöffnungen besitzt, verklebt ist. Auf diese Weise wird zum einen eine sichere, leicht herzustellende und abdichtende Verbindung zwischen dem Innenrohr und dem Außenrohr hergestellt und durch die Querschnittsverjüngung des Haltebundes die Montage beim Einschieben des gesamten Filterrohres in die zuvor eingebrachte Bohrung erleichtert.

Eine Weiterbildung des erfindungsgemäßen Filterrohres besteht auch darin, dass die Filteröffnungen als in Längsrichtung des Filterrohres verlaufende und in Umfangsrichtung verteilt angeordnete Schlitze ausgebildet sind. Derartige Schlitz- oder Spaltöffnungen als Filteröffnungen haben sich in der Vergangenheit bereits auch bei Edelstahlkonstruktionen von Filterrohren bewährt.

Gemäß einer weiteren Ausgestaltung ist vorgesehen, dass die Schlitze sich im Querschnitt von der äußeren Mantelfläche der Filterelemente her bis zu deren innerer Mantelfläche erweitern und zwar insbesondere im Querschnitt trapezförmig sind.

Eine besonders bevorzugte Ausgestaltung des erfindungsgemäßen Filterrohrs besteht darin, dass das Innenrohr und/oder das Außenrohr, insbesondere die dieses bildenden Filterelemente aus Kunststoff, vorzugsweise aus einem Kunststoff mit Faserverstärkung bestehen. Als bevorzugte Kunststoffe kommen hier insbesondere Polypropylen für die Filterelemente und Epoxydharze oder Vinylesterharze für das Innenrohr in Frage. Bevorzugt finden des weiteren Verstärkungsfasern aus Glas, Kohlenstoff oder Kunststoff Anwendung. Das Innenrohr wird bevorzugt in Wickeltechnik hergestellt, wohingegen die Filterelemente, insbesondere in Form von schalenförmigen Elementen, als Spritzgussteile hergestellt werden.

Die Erfindung weiter ausgestaltend ist vorgesehen, dass das Innenrohr aus in axialer Richtung hintereinander angeordneten Innenrohrstücken besteht, die an einem Ende mit einer Muffe und an dem anderen Ende mit einer zu der Muffe komplementären Einsteckende versehen sind, wobei in Muffe und in Einsteckende korrespondierende Nuten Verdichtungsringe angeordnet sind.

### Ausführungsbeispiel

Die Erfindung wird nachfolgend anhand eines Ausführungsbeispiels eines Filterrohrs, das in der Zeichnung dargestellt ist, näher erläutert. Es zeigt
- Fig. 1: einen Längsschnitt durch ein Innenrohrstück eines Filterrohres
- Fig. 2: eine vergrößerte Darstellung der Muffe des Innenrohrstücks nach Figur 1
- Fig. 3a: einen Querschnitt entlang der Linie IIIa - IIIa durch die Muffe nach Figur 2
- Fig. 3b: einen Querschnitt entlang der Linie IIIb - IIIb durch die Muffe nach Figur 2
- Fig. 4: die Außenseite eines schalenförmigen Filterelements in einer perspektivischen Darstellung
- Fig. 5: die Innenseite eines schalenförmigen Filterelements in einer perspektivischen Darstellung
- Fig. 6: eine aus zwei Schellenabschnitten bestehende Schelle in einer ersten Ansicht
- Fig. 7: wie Fig. 6, jedoch in einer anderen Ansicht
- Fig. 8: eine Darstellung zweier mittels einer Schelle verbundener Filterelemente im Längsschnitt
- Fig. 9: einen Querschnitt durch drei zu einem Außenrohrstück zusammengefügten schalenförmigen Filterelementen
- Fig. 10: einen Halbschnitt in axiale Richtung eines Haltebundes

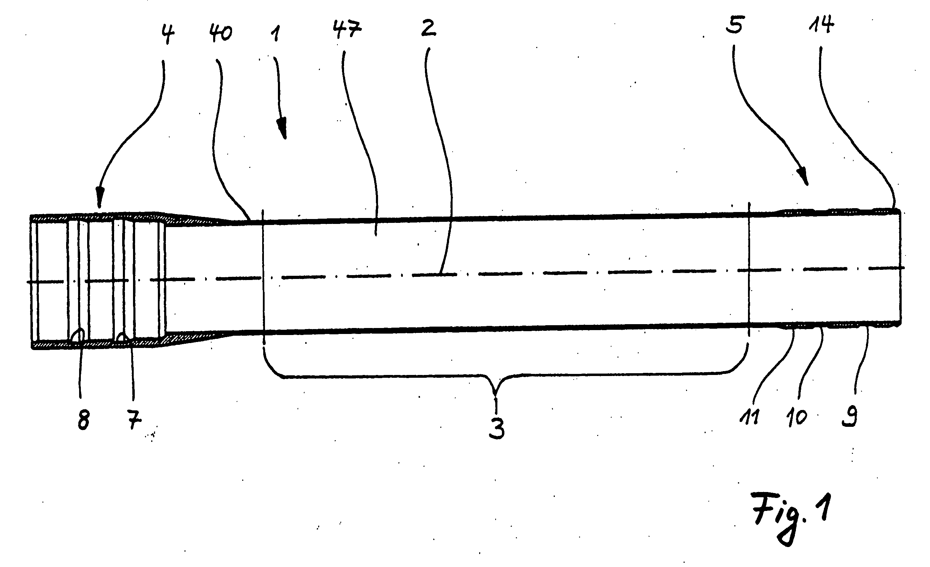

Figur 1 zeigt in einem Längsschnitt ein Innenrohrstück 1, von dem eine bestimmte Anzahl in Richtung einer Längsachse 2 hintereinander gefügt wird, um ein in seiner Gesamtheit nicht dargestelltes Innenrohr eines Filterrohres zu bilden. Das Innenrohrstück 1 weist einen Mittelbereich 3 auf, der mit einer Vielzahl von langlochförmigen nicht näher dargestellten Durchtrittsöffnungen versehen ist. Die Durchtrittsöffnungen besitzen eine Länge von ca. 50 mm und eine Breite von ca. 17 mm. Der Mittelbereich 3 des in Figur 1 dargestellten Innenrohrstücks 1 ist ca. 8,75 m lang und besitzt ca. 300 reihenweise versetzte Durchtrittsöffnungen. Die Gesamtlänge des Innenrohrstücks 1 beträgt z.B. 10 m. Der Innendurchmesser des Innenrohres beträgt ca. 150 mm bis 400 mm.

Das Innenrohrstück 1 ist an einem Ende mit einer Muffe 4 und an dem gegenüberliegenden Ende mit einem Einsteckende 5 versehen. Das Einsteckende 5 eines Innenrohrstücks 1 ist in die Muffe 4 eines axial benachbarten Innenrohrstücks 1 einschiebbar.

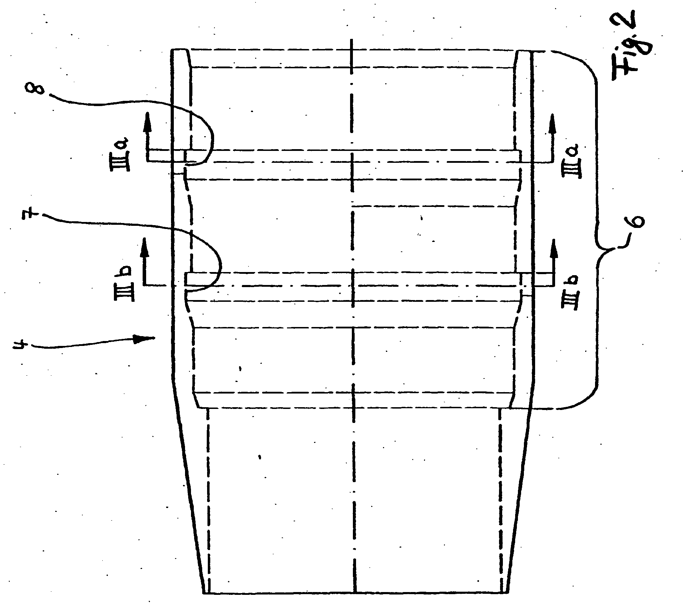

In Figur 2 ist die Muffe 4 des Innenrohrstücks 1 vergrößert dargestellt. In einem Überlappungsbereich 6, in den das Einsteckende 5 des benachbarten Innenrohrstücks einschiebbar ist, sind in der inneren Mantelfläche der Muffe 4 zwei Nuten 7 und 8 eingearbeitet, die mit Nuten 9 und 10 der äußeren Mantelfläche 11 des Einsteckendes 5 in dessen eingeschobenen Zustand korrespondieren. Die Nuten 9 und 10 sind in Figur 1 dargestellt.

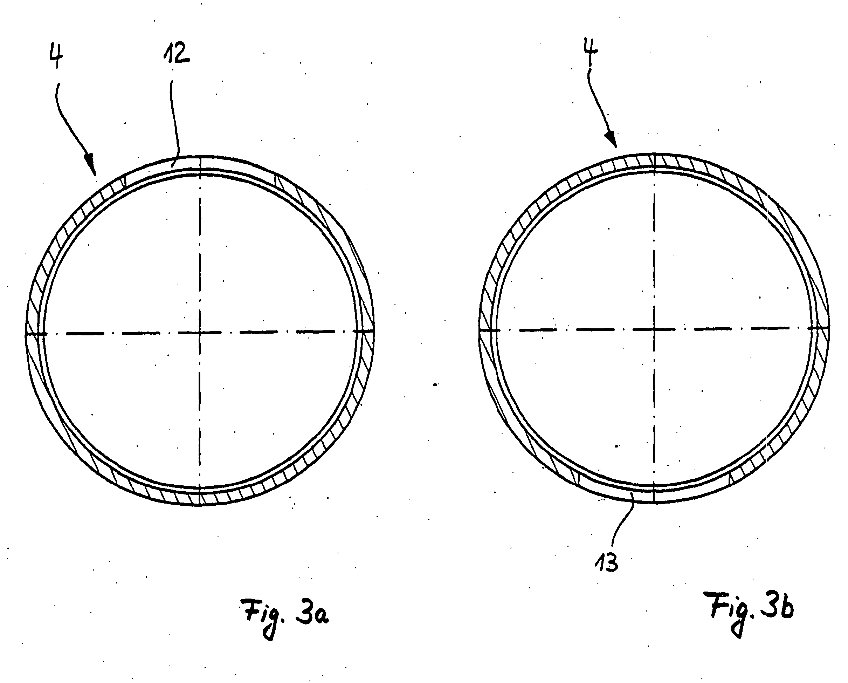

Des weiteren lässt sich aus den Figuren 3a und 3b entnehmen, dass die Muffe 4 im Bereich der Nuten 7 und 8 mit um 180° gegeneinander versetzt angeordneten Durchbrüchen 12 und 13 versehen ist, die dazu dienen, dass zwei ineinander gesteckte Innenrohrstücke 1 mithilfe von nicht dargestellten Verriegelungselementen formschlüssig ineinander gehalten werden können. Die Verriegelungsstücke greifen dabei in die Nuten 9 und 10 in dem Einsteckende 5 ein.

Ferner besitzt das Innenrohrstück 1 im Bereich des Einsteckendes 5 noch eine vordere weitere Nut 14, in die ein Dichtring eingelegt wird.

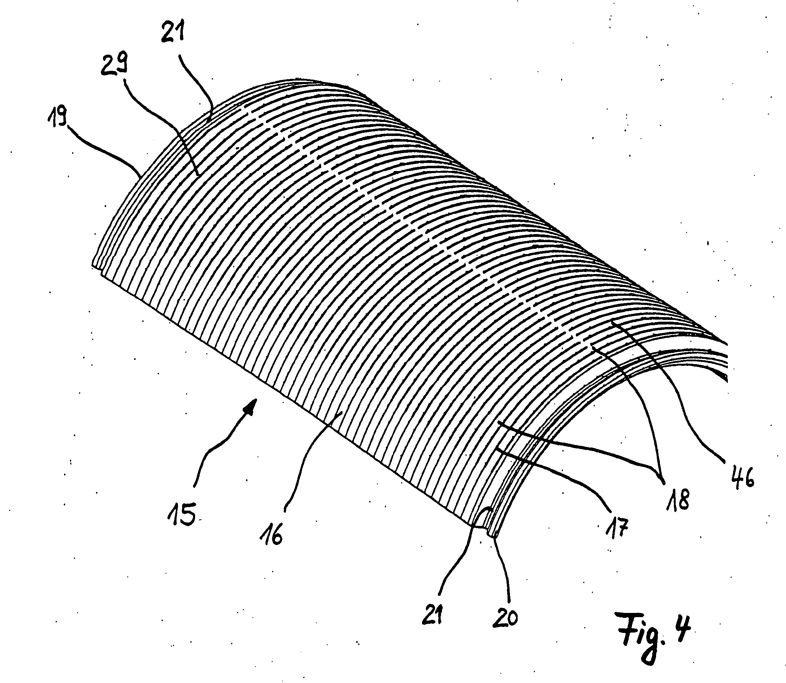

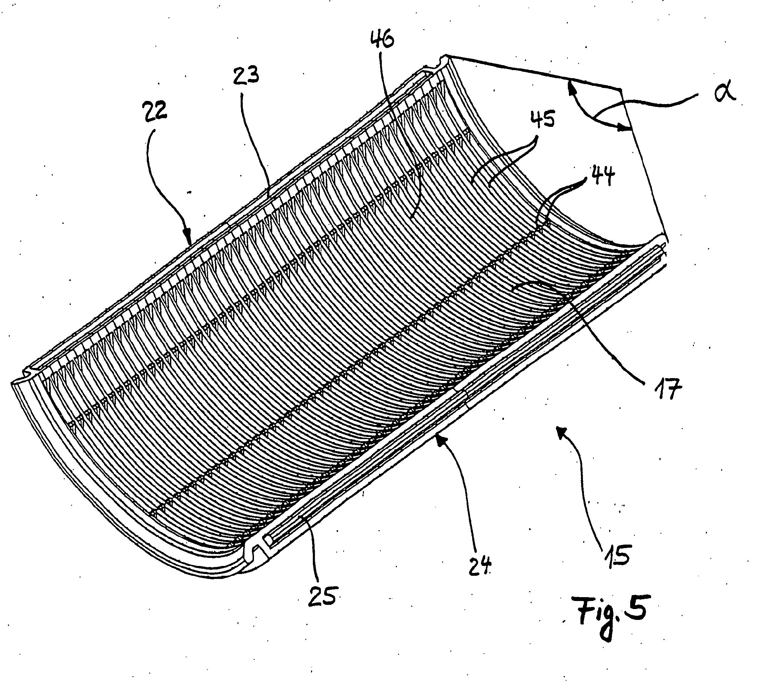

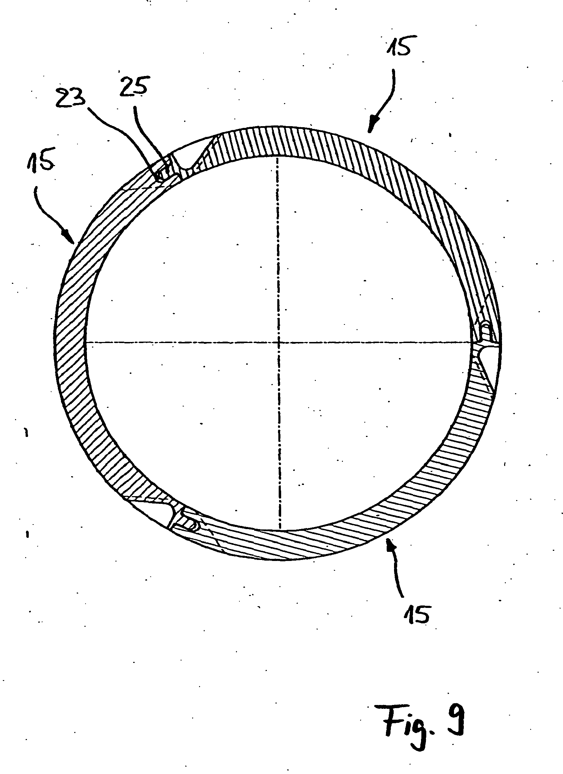

In den Figuren 4 und 5 ist jeweils ein schalenförmiges Filterelement 15 dargestellt. Die Filterelemente schließen einen Winkel α von 120° ein, d. h. drei identische Filterelemente 15 werden in Umfangsrichtung des Innenrohres, d. h. des Filterrohres, aneinender gesetzt, um einen Abschnitt eines geschlossenen, in der Figur 9 dargestellten Außenrohres zu bilden.

Filteröffnungen 17 zum Durchtritt der zu filternden Flüssigkeit, insbesondere von Wasser, befinden sich in der äußeren Mantelfläche 16 des Filterelements 15. Die Filteröffnungen 17 besitzen die Form von langgestreckten Schlitzen oder Spalten, die parallel zueinander und äquidistant zu einander angeordnet in Umfangsrichtung des von den Filterelementen 15 gebildeten Außenrohres verlaufen. In Längsrichtung der Filtersegmente verlaufende Stege 18 unterteilen die Schlitze in jeweils vier Abschnitte und zwar zwei kürzere, äußere und zwei längere, innenliegende Abschnitte.

Aus den Figuren 4 und 5 lässt sich entnehmen, dass die Filterelemente 15 in der Nähe ihrer beiden Stirnseiten 19, 20 mit jeweils einer umlaufenden Nut 21 versehen sind. Des weiteren ergibt sich aus diesen Figuren, dass die Filterelemente 15 an einem Längsrand 22 mit einer in Längsrichtung verlaufenden Nut 23 und an dem gegenüberliegenden Längsrand 22 mit einer in Längsrichtung verlaufenden Feder 25, d. h. einem vorstehenden Stegelement, versehen ist. Die Feder 25 eines Filterelements 15 ist in die komplementär hierzu ausgebildete Nut 23 eines in Umfangsrichtung benachbarten Filterelements 15 einsteckbar. Auf diese Weise wird zunächst ein radialer Versatz im Bereich der Stoßstellen zweier benachbarter Filterelemente 15 verhindert. Da die Federn 25 in ihrer axialen Länge an die axiale Länge der Nut 23 angepasst sind, ist auch eine Relativbewegung benachbarter Filterelemente 15 in axiale Richtung nach dem Herstellen der formschlüssigen Verbindung unmöglich. Drei in Umfangsrichtung benachbarte Filterelemente 15 bilden somit einen Abschnitt eines umlaufenden Außenrohres (Fig. 9).

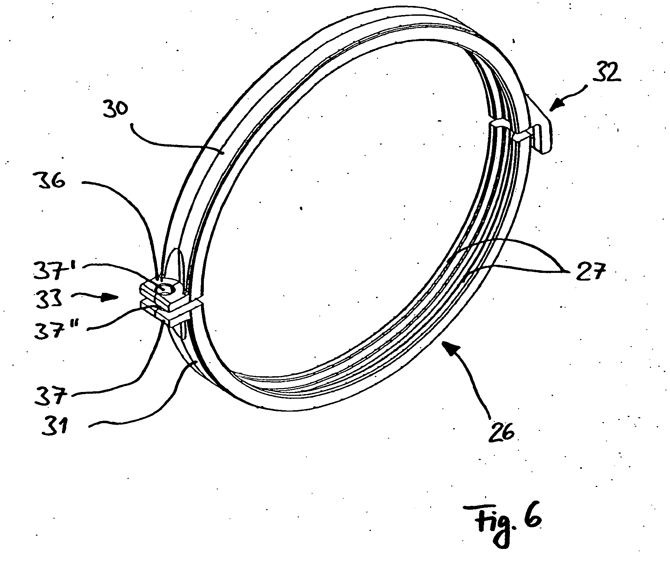

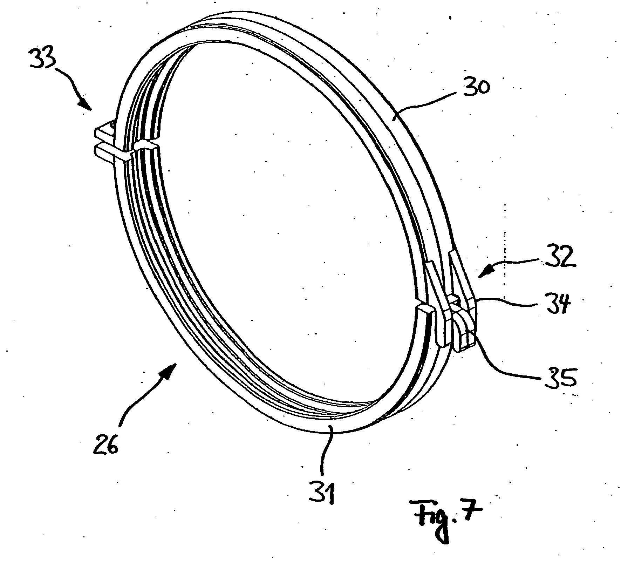

Die Verbindung der hier vorstehend beschriebenen Außenrohrabschnitte in axiale Richtung des Filterrohres erfolgt mithilfe der in den Figuren 4 und 5 gezeigten stirnseitigen Nuten 21. Als Verbindungselemente kommen hier im Querschnitt U-förmige Schellen 26 zum Einsatz, die mit zwei radial nach innen vorstehenden, umlaufenden Federn 27 versehen sind und in den Figuren 6 und 7 gezeigt sind. Die Federn 27 sind in ihrem Querschnitt an den Querschnitt der Nuten 21 in den Filterelemente 15 abgestimmt. Der Abstand zwischen den beiden Federn 27 ist des weiteren so bemessen, dass der Abstand zweier Nuten 21 entspricht, wenn benachbarte Filterelemente 15 stirnseitig unmittelbar aneinander stoßen.

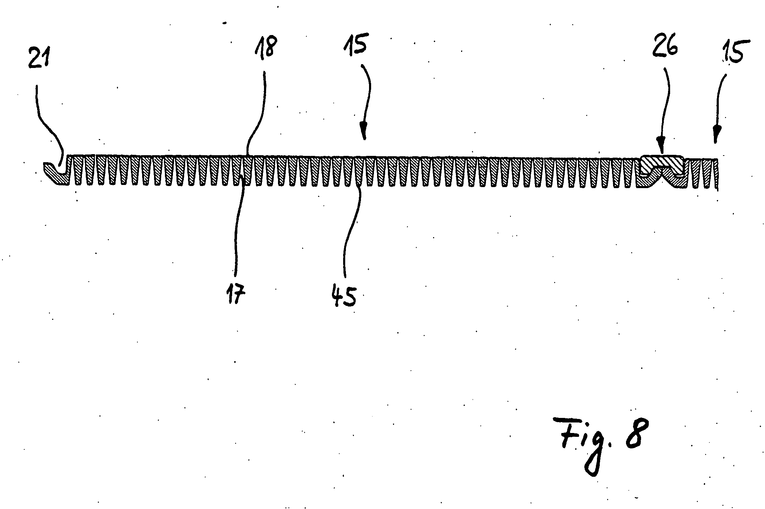

Figur 8 zeigt in einem Teil -Längsschnitt wie zwei in axiale Richtung nebeneinander angeordnete Filterelemente 15 mittels einer Schelle 26 aneinander gekoppelt sind. Die äußere Mantelfläche 28 der Schelle 26 ist dabei im wesentlichen bündig mit der äußeren Mantelfläche 29 der Filterelemente 15. Ein durchgängiges Außenrohr lässt sich unter Verwendung einer entsprechenden Zahl von Filterelementen 15 und Schellen 26 dadurch erreichen, dass in Umfangsrichtung betrachtet jeweils drei Filterelemente 15 einen Abschnitt des Außenrohres bilden (Fig. 9), der mit zwei benachbarten ebenso gebildeten Außenrohabschnitten mittels zweier Schellen 26 verbunden wird.

Aus den Figuren 6 und 7 ergibt sich ferner noch, dass die aus zwei Schellenabschnitten 30, 31 gebildete Schelle 26 an einem Ende durch eine Haken-/Ösenverbindung 32und auf der gegenüberliegenden Seite durch eine Flanschverbindung 33 zusammengehalten wird. Die Haken-/Ösenverbindung 32 wird gebildet durch eine an dem Schellenabschnitt 30 ausgebildete radial nach außen vorstehende Öse 34 und einen in diese eingreifenden radial von dem anderen Schellenabschnitt 32 nach außen vorstehenden Haken 35. Dem gegenüber wird eine Verbindung an der gegenüberliegenden Stoßstelle der Schelle 36 durch 2 Flansche 36, 37 gebildet, die jeweils eine miteinander korrespondierende Bohrungen 37', 37" aufweisen, durch die eine Verbindungsschraube durchgeführt wird, welche wiederum mit einer Mutter versehen wird.

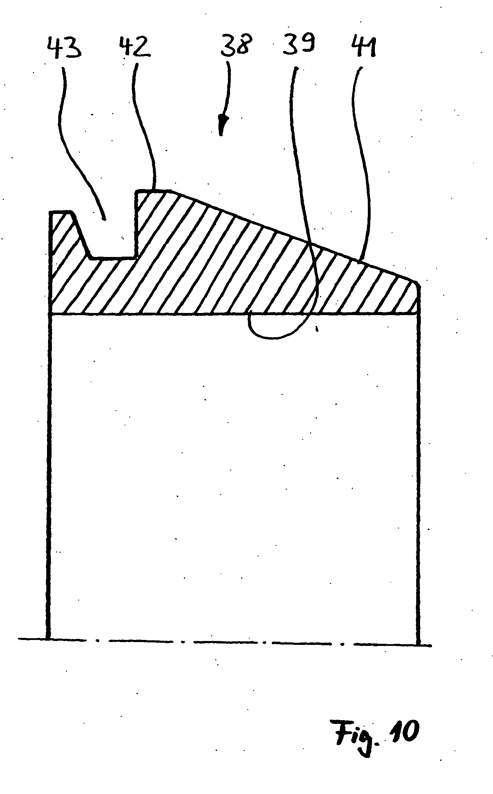

Schließlich zeigt Figur 10 noch einen Halbschnitt durch einen Haltebund 38, der als mittig längs geteiltes Bauteil in Form von zwei Halbschalen mit jeweils der inneren Mantelfläche 39 mit der äußeren Mantelfläche 40 des Innenrohrstücks 1 (siehe Figur 1) verklebt wird. Die Verklebung des Haltebundes 38 erfolgt zu beiden Seiten neben dem Mittelbereich 3, so dass die Klebestelle jeweils frei von Durchbrüchen ist. Die Haltebunde 38 bilden zu beiden Enden des aus einer Mehrzahl von Filterelementen 15 gebildeten Außenrohres einen stirnseitigen Abschluss und aufgrund der geneigten Rampenflächen 41 einen fließenden Übergang zwischen der Mantelfläche 40 des Innenrohrstücks 1 und der äußeren Mantelfläche 29 der Filterelemente 15. Des weiteren stellen die Haltebunde 38 eine kraftschlüssige Verbindung zwischen dem Innenrohr und dem Außenrohr her.

An dem der Rampenfläche 41 abgewandten Ende des Haltebundes 38 ist in dessen Mantelfläche 42 eine Nut 43 ausgebildet, die in ihrem Querschnitt den Nuten 21 an den Stirnseiten der Filterelemente 15 entspricht. Auf diese Weise lassen sich ein Haltebund 38 und ein benachbartes Filterelement 15 bzw. ein aus drei derartigen Filterelementen 15 gebildeter Außenrohrabschnitt ebenso mithilfe einer Schelle 26 koppeln wie zwei benachbarte und aus Filterelementen 15 gebildete Abschnitte des Außenrohres.

Aus Figur 5 lässt sich schließlich noch erkennen, dass eine Abstützung der Filterelemente 15 auf der äußeren Mantelfläche 40 eines Innenrohrstücks 1 mithilfe von Noppen 44 erfolgt, die über die innere Mantelfläche der Filterelemente 15 radial nach innen vorstehen. Die innere Mantelfläche 45 der Filterelemente 15 wird im übrigen von der Innenseite von Rippen 46 gebildet, die benachbarte Filteröffnungen 17 voneinander trennen. Aus einem Vergleich der Figuren 4 und 5 wird deutlicht, dass die Filteröffnungen 17 im Bereich der äußeren Mantelfläche 29 der Filterelemente 15 eine sehr viel geringere Breite (ca. 0,5 mm) aufweisen, als im Bereich der inneren Mantelfläche 45, wo die Breite ca. 3 mm beträgt. Mit der Breite der zwischen benachbarten Filteröffnungen 17 befindlichen Rippen 46 verhält es sich umgekehrt, wobei die Rippenbreite im Bereich der inneren Mantelfläche 45 ca. 1,5 mm beträgt. Dies lässt sich sehr anschaulich auch dem Längsschnitt der Fig. 8 entnehmen.

Sofern die Länge des Außenrohres, d. h. die Länge der mit Filteröffnungen 17 bestückten Filterelemente 15 größer als die Länge des Mittelbereichs 3 eines Innenrohrstücks sein soll, so können mehrere hintereinander angeordnete - oder auch beabstandete-Innenrohrstücke 1 mit Filterelementen 15 versehen werden. Auch mächtige wasserführende Schichten können so effektiv ausgebeutet werden. Im Bereich jedes Innenrohrstücks 1 bildet sich ein separater Zwischenraum zwischen dem Innenrohr und dem aus einer Mehrzahl von Filterelementen 15 gebildeten Außenrohr aus.

Das vordere Ende des am weitesten in das Bohrloch eingebrachten Innenrohrstücks 1 ist mit einer nicht dargestellten Verschlusseinrichtung nach Art eines Deckels abgeschlossen, um stirnseitig ein Eindringen ungefilterten Wassers in den Innenraum 47 (siehe Figur 1) des Innenrohrstücks 1 zu verhindern. Von dort wird mithilfe einer von der Erdoberfläche bis in den Bereich der wasserführenden Schicht eingebrachten Pumpe das gefilterte Wasser mittels einer Steigleitung an die Erdoberfläche befördert. Oberhalb der wasserführenden Schicht sind dabei in Verlängerung des Innenrohrs in entsprechender Anzahl geschlossene Rohrstücke in axiale Richtung hintereinander bis zur Erdoberfläche angeordnet

## Patentansprüche

1. Filterrohr für einen Erdbrunnen mit einem sich in Längsrichtung des Filterrohres erstreckenden Innenraum (47) und einem diesen umgebenden Mantel, in dem sich Filteröffnungen (17) zum Durchtritt von Flüssigkeit aus einer den Mantel an dessen Außenseite umgebenden Umgebung in den Innenraum (47) befinden, wobei der Mantel aus einem den Innenraum begrenzenden Innenrohr und Filterelementen besteht, in denen sich die Filteröffnungen befinden und die außerhalb des Innenrohres angeordnet sind, das Durchtrittsöffnungen für die durch die Filteröffnungen (17) der Filterelemente (15) in einem Zwischenraum zwischen den Filterelementen (15) und dem Innenrohr eintretende Flüssigkeit aufweist, wobei der Zwischenraum mit Ausnahme der Filteröffnungen (17) gegenüber der Umgebung abgeriegelt ist, **dadurch gekennzeichnet, dass** die Filterelemente (15) angrenzend an ihre Stirnseiten jeweils eine umlaufende Nut (21) aufweisen, wobei eine Schelle (26) mit zwei umlaufenden zu den Nuten (21) komplementären Federn (27) versehen ist, die mit den Nuten (21) stirnseitig aneinander stoßender Filterelemente (15) in Eingriff bringbar sind.

2. Filterrohr nach Anspruch 1, **dadurch gekennzeichnet, dass** die Filterelemente (15) schalenförmige Filtersegmente sind, die ein in Umfangsrichtung geschlossenes Außenrohr bilden.

3. Filterrohr nach Anspruch 2, **dadurch gekennzeichnet, dass** die schalenförmigen Filtersegmente an einem Längsrand (22) mit einer Nut (23) und an dem gegenüber liegenden Längsrand (24) mit einer zu der Nut (23) komplementären Feder (25) versehen sind.

4. Filterrohr nach einer der Ansprüche 1 bis 3, **dadurch gekennzeichnet, dass** die Filterelemente (15) in Längsrichtung des Filterrohres zu einem zusammenhängenden Außenrohr zusammenfiigbar sind.

5. Filterrohr nach einer der Ansprüche 1 bis 4, **dadurch gekennzeichnet, dass** die Schelle (26) aus mindestens zwei Schellenabschnitten (30, 31) bestehen, die sich lediglich über einen Teilbereich des Umfangs des Filterrohres erstrecken und kraftschlüssig in Umfangsrichtung miteinander koppelbar sind.

6. Filterrohr nach Anspruch 5, **dadurch gekennzeichnet, dass** die Schellenabschnitte (30, 31) an einem Ende mit einer Bohrung (37', 37") aufweisenden Flansch (36, 37) und an dem anderen Ende mit einer Haken-/Ösenverbindung (32) versehen sind.

7. Filterrohr nach einer der Ansprüche 1 bis 6, **dadurch gekennzeichnet, dass** das Außenrohr an zumindest einem Ende mit einem Haltebund (38) versehen ist, der an seiner dem Außenrohr zugewandten Seite eine umlaufende Nut (43) aufweist, wobei eine Schelle (26) mit zwei umlaufenden zu der Nut (43) komplementäre Feder (27) versehen ist, die mit der Nut (21) eines endständigen Filterelements (15) und der Nut (43) des Haltebunds (38) in Eingriff bringbar sind.

8. Filterrohr nach Anspruch 7, **dadurch gekennzeichnet, dass** der Haltebund (38) im Querschnitt in seiner Höhe in Richtung von dem Außenrohr weg abnimmt und das der Haltebund (38) an seiner inneren Mantelfläche (39) mit der äußeren Mantelfläche (40) des Innenrohres, das dort keine Durchtrittsöffnungen besitzt, verklebt ist.

9. Filterrohr nach einem der Ansprüche 1 bis 8, **dadurch gekennzeichnet, dass** die Filteröffnung (17) als in Längsrichtung des Filterrohres verlaufende in Umfangsrichtung verteilt angeordnete Schlitze ausgebildet sind.

10. Filterrohr nach Anspruch 9, **dadurch gekennzeichnet, dass** die Schlitze sich im Querschnitt von der äußeren Mantelfläche (29) der Filterelemente (15) bis zu deren innerer Mantelfläche (45) erweitern und insbesondere im Querschnitt trapezförmig sind.

11. Filterrohr nach einem der Ansprüche 1 bis 10, **dadurch gekennzeichnet, dass** das Innenrohr und/oder das Außenrohr, insbesondere die dieses bildenden Filterelemente, aus Kunststoff, vorzugsweise aus einem Kunststoff mit Faserverstärkung, bestehen.

12. Filterrohr nach Anspruch 11, **dadurch gekennzeichnet, dass** das Innenrohr in der Wickeltechnik und/oder die schalenförmigen Filterelemente (15) in der Spritzgusstechnik hergestellt sind.

13. Filterrohr nach einem der Ansprüche 1 bis 12, **dadurch gekennzeichnet, dass** das Innenrohr aus in axiale Richtung hintereinander angeordneten Innenrohrstücken (1) besteht, die an einem Ende mit einer Muffe (4) und an dem anderen Ende mit einer zu der Muffe (4) komplementären Einsteckende (5) versehen sind, wobei in Muffe (4) und Einsteckende (5) korrespondierende Nuten für Arretierungselemente und/oder Dichtungsringe sowie in der Muffe (4) mit den Nuten korrespondierende Durchbrüche (12) für von außen einbringbare Verriegelungselemente angeordnet sind.

## Claims

1. A filter tube for a well having an inner space (47) extending in the longitudinal direction of the filter tube and a sheath enclosing it, in which filter openings (17) are located for the passage of liquid from an environment surrounding the sheath on its exterior side into the inner space (47), the sheath comprising an inner tube delimiting the inner space and filter elements, in which the filter openings are located and which are situated outside the inner tube, which has through openings for the liquid entering through the filter openings (17) of the filter elements (15) into an intermediate space between the filter elements (15) and the inner tube, the intermediate space being closed off in relation to the environment with the exception of the filter openings (17), **characterized in that** the filter elements (15) each have a peripheral groove (21) adjoining their front faces, a hose clamp (26) having two peripheral tongues (27), which are complementary to the groove (21) and which may be engaged with the grooves (21) of filter elements (15) abutting on their front faces, being provided.

2. The filter tube according to Claim 1, **characterized in that** the filter elements (15) are shell-shaped filter segments, which form an external tube closed around the circumference.

3. The filter tube according to Claim 2, **characterized in that** the shell-shaped filter segments are provided on one longitudinal edge (22) with a groove (23) and on the opposite longitudinal edge (24) with a tongue (25) complementary to the groove (23).

4. The filter tube according to one of Claims 1 through 3, **characterized in that** the filter elements (15) may be joined in the longitudinal direction of the filter tube to form a coherent outer tube.

5. The filter tube according to one of Claims 1 through 4, **characterized in that** the hose clamp (26) comprises at least two hose clamp sections (30, 31), which only extend around a part of the circumference of the filter tube and may be coupled to one another friction-locked around the circumference.

6. The filter tube according to Claim 5, **characterized in that** the hose clamp sections (30, 31) are provided on one end with a flange (36, 37) having a hole (37', 37"), and on the other end with a hook/eye connection (32).

7. The filter tube according to one of Claims 1 through 6, **characterized in that** the outer tube is provided on at least one end with a retention shoulder (38), which has a peripheral groove (43) on its side facing toward the outer tube, a hose clamp (26) having two peripheral tongues (27), which are complementary to the groove (43) and which may be engaged with the groove (21) of a terminal filter element (15) and the groove (43) of the retention shoulder (38), being provided,.

8. The filter tube according to Claim 7, **characterized in that** the retention shoulder (38) decreases in height in cross-section in the direction away from the outer tube, and the internal lateral surface (39) of the retention shoulder (38) is glued to the external lateral surface (40) of the inner tube, which has no through openings there.

9. The filter tube according to one of Claims 1 through 8, **characterized in that** the filter openings (17) are implemented as slots, which run in the longitudinal direction of the filter tube and are distributed around the circumference.

10. The filter tube according to Claim 9, **characterized in that** the slots expand in cross-section from the external lateral surface (29) of the filter elements (15) up to their internal lateral surface (45) and are particularly trapezoidal in cross-section.

11. The filter tube according to one of Claims 1 through 10, **characterized in that** the inner tube and/or the outer tube, in particular the filter elements forming them, comprise plastic, preferably a plastic having fiber reinforcement.

12. The filter tube according to Claim 11, **characterized in that** the inner tube is produced in the wire-wrap technique and/or the shell-shaped filter elements (15) are produced in injection molding technology.

13. The filter tube according to one of Claims 1 through 12, **characterized in that** the inner tube comprises inner tube parts (1) situated one behind another in the axial direction, which are provided on one end with a sleeve (4) and on the other end with an insertion end (5) complementary to the sleeve (4), corresponding grooves for locking elements and/or seal rings being situated in the sleeve (4) and insertion end (5) and openings (12) corresponding to the grooves for externally insertable locking elements being situated in the sleeve (4).

## Revendications

1. Tube de filtration pour un puits avec un espace intérieur (47) s'étendant dans le sens longitudinal du tube de filtration et une enveloppe entourant celui-ci, dans laquelle sont prévues des ouvertures de filtration (17) pour le passage de liquide d'un environnement entourant l'enveloppe sur sa face extérieure vers l'espace intérieur (47), l'enveloppe se composant d'un tube intérieur délimitant l'espace intérieur et d'éléments filtrants, dans lesquels se trouvent les ouvertures de filtration et qui sont disposés à l'extérieur du tube intérieur, qui présente des ouvertures de passage pour le liquide entrant à travers les ouvertures de filtration (17) des éléments filtrants (15) dans un espace intermédiaire entre les éléments filtrants (15) et le tube intérieur, l'espace intermédiaire étant isolé de l'environnement à l'exception des ouvertures de filtration (17), **caractérisé en ce que** les éléments filtrants (15) présentent une rainure (21) continue contiguë de leurs faces d'extrémité, une bride de fixation (26) étant dotée de deux languettes (27) continues complémentaires des rainures (21) qui peuvent être mises en prise avec les rainures (21) d'éléments filtrants (15) butant l'un sur l'autre par leurs faces d'extrémité.

2. Tube de filtration selon la revendication 1, **caractérisé en ce que** les éléments filtrants (15) sont des segments de filtre en forme de coque qui forment un tube extérieur fermé dans le sens de la circonférence.

3. Tube de filtration selon la revendication 2, **caractérisé en ce que** les segments de filtre en forme de coque sont pourvus sur un bord longitudinal (22) d'une rainure (23) et sur le bord longitudinal opposé (24) d'une languette (25) complémentaire de la rainure (23).

4. Tube de filtration selon l'une des revendications 1 à 3, **caractérisé en ce que** les éléments filtrants (15) peuvent être assemblés dans le sens longitudinal du tube de filtration pour former un tube extérieur d'un seul tenant.

5. Tube de filtration selon l'une des revendications 1 à 4, **caractérisé en ce que** la bride de fixation (26) se compose d'au moins deux parties de bride (30, 31) qui s'étendent seulement sur une partie de la circonférence du tube de filtration et peuvent être couplés entre eux par friction dans le sens de la circonférence.

6. Tube de filtration selon la revendication 5, **caractérisé en ce que** les parties de bride (30, 31) sont munies à une extrémité d'un flasque (36, 37) présentant un trou percé (37', 37") et à l'autre extrémité d'un assemblage par crochet et oeillet (32).

7. Tube de filtration selon l'une des revendications 1 à 6, **caractérisé en ce que** le tube extérieur est doté à au moins une extrémité d'un collet de fixation (38) qui présente sur son côté orienté vers le tube extérieur une rainure continue (43), une bride de fixation (26) étant dotée de deux languettes (27) continues complémentaires de la rainure (43), qui peuvent être mises en prise avec la rainure (21) d'un élément filtrant (15) posé sur son extrémité et avec la rainure (43) du collet de fixation (38).

8. Tube de filtration selon la revendication 7, **caractérisé en ce que** le collet de fixation (38) diminue de hauteur en section en direction du tube extérieur et **en ce que** le collet de fixation (38) est collé sur sa surface d'enveloppe intérieure (39) à la surface d'enveloppe extérieure (40) du tube intérieur, qui ne possède pas d'ouvertures de passage à cet endroit.

9. Tube de filtration selon l'une des revendications 1 à 8, **caractérisé en ce que** l'ouverture de filtration (17) est conformée comme des fentes orientées dans le sens longitudinal du tube de filtration et réparties sur la circonférence.

10. Tube de filtration selon la revendication 9, **caractérisé en ce que** les fentes s'élargissent en section de la surface d'enveloppe extérieure (29) des éléments filtrants (15) à leur surface d'enveloppe intérieure (45) et ont en particulier une forme trapézoïdale en section.

11. Tube de filtration selon l'une des revendications 1 à 10, **caractérisé en ce que** le tube intérieur et/ou le tube extérieur, en particulier les éléments filtrants formant ceux-ci, se composent de matière plastique, de préférence d'un plastique armé de fibres.

12. Tube de filtration selon la revendication 11, **caractérisé en ce que** le tube intérieur est fabriqué par la technique d'enroulement et/ou les éléments filtrants (15) en forme de coque par la technique de moulage par injection.

13. Tube de filtration selon l'une des revendications 1 à 12, **caractérisé en ce que** le tube intérieur se compose de tronçons de tube intérieur (1) disposés les uns à la suite des autres dans le sens axial, qui sont dotés à une extrémité d'un manchon (4) et à l'autre extrémité d'une extrémité d'emboîtement (5) complémentaire du manchon (4), des rainures correspondantes étant prévues dans le manchon (4) et l'extrémité d'emboîtement (5) pour des éléments de blocage et/ou des joints d'étanchéité et des ouvertures (12) correspondant aux rainures étant prévues dans le manchon (4) pour des éléments de verrouillage pouvant être introduits par l'extérieur.
